# EUROPÄISCHE PATENTSCHRIFT

(11) **EP 1 137 689 B1**
(45) Veröffentlichungstag und Bekanntmachung des Hinweises auf die Patenterteilung: **05.03.2003**
(21) Anmeldenummer: 99963380.3
(22) Anmeldetag: 03.12.1999
(51) Int. Cl.: C08G 18/79, C08G 18/22

(54) **HÄRTBARE URETDIONGRUPPENHALTIGE MASSEN UND EIN VERFAHREN ZU IHRER HERSTELLUNG UND VERARBEITUNG SOWIE IHRE VERWENDUNG**
HARDENABLE MATERIALS WHICH CONTAIN URETDIONE GROUPS, METHOD FOR THE PRODUCTION AND PROCESSING THEREOF, AND THEIR UTILIZATION
MATIERE DURCISSABLE CONTENANT DES GROUPES URETHANEDIONE, PROCEDE DE PRODUCTION ET DE TRAITEMENT DE CES MATIERES, ET LEUR UTILISATION

(30) Priorität: 10.12.1998 DE 19856878
(43) Veröffentlichungstag der Anmeldung: 04.10.2001
(73) Patentinhaber: Institut für Polymerforschung Dresden e.V., 01069 Dresden (DE)
(72) Erfinder: LEHMANN, Frank, D-01099 Dresden (DE); GEDAN-SMOLKA, Michaela, D-01990 Ortrand (DE); LEHMANN, Dieter, D-01646 Coswig (DE)
(74) Vertreter: Rauschenbach, Marion, Dipl.-Ing.
(86) Internationale Anmeldenummer: EP9909465
(87) Internationale Veröffentlichungsnummer: WO00034355

(56) Entgegenhaltungen:
- US-A- 4 732 957
- US-A- 5 621 064
- US-A- 5 756 634

## Beschreibung

Die Erfindung bezieht sich auf das Gebiet der Chemie und betrifft härtbare Massen, wie sie beispielsweise für die Herstellung von Lacken eingesetzt werden können und ein Verfahren zu ihrer Herstellung und Verarbeitung.

Die Blockierung von Isocyanaten mittels Dimerisierung zu Uretdionen stellt eine effektive Methode dar, Isocyanatgruppen vor vorzeitiger Reaktion zu schützen. Ein wichtiges Einsatzgebiet von uretdiongruppenhaltigen Härtern stellt die Beschichtung hitzeresistenter Substrate, speziell mit Pulverlacken, **dar**.

Pulverlacke sind frei von Lösemitteln und demzufolge weitgehend frei von schädlichen Emissionen und sie besitzen ein sehr hohes Lackieräquivalent. Die Pulverlackierung stellt somit ein sehr umweltfreundliches und wirtschaftliches Beschichtungsverfahren dar.

Beschichtungen auf Polyurethanbasis zeichnen sich durch besondere Licht- und Wetterbeständigkeit und hervorragende optische Eigenschaften aus. Die heute in der Praxis angewandten Polyurethanpulverlacke basieren auf festen Hydroxylgruppen tragenden Polyestem sowie festen aliphatischen bzw. cycloaliphatischen Polyisocyanaten, deren Isocyanatfunktionen durch externe, niedermolekulare Verkappungsmittel vor vorzeitiger Reaktion geschützt werden. Diese Verkappungsmittel entweichen zumindest teilweise während der thermischen Aushärtung des Pulverlackes. Diese Emissionen laufen der prinzipiellen Emissionsfreiheit von Pulverlackformulierungen entgegen und bedingen aus Gründen von Ökologie und Arbeitsplatzhygiene besondere Vorkehrungen.

Durch den Einsatz von uretdiongruppenhaltigen Vernetzern (z.B. DE 23 12 391 OS, EP 045 998 A1, EP 669 353 A1) besteht die Möglichkeit derartige Emissionen niedermolekularer Substanzen zu vermeiden. Aufgrund der geringen Reaktivität der intern blockierten Isocyanatgruppen ist der Einsatz entsprechender uretdiongruppenhaltiger Härter bis zum heutigen Tag begrenzt, da die zur Aushärtung notwendigen Temperaturen größer 160°C zu hoch liegen und/oder die zur Aushärtung notwendige Zeit zu lang ist. Mit Blick auf die Kosten für Energie und die Möglichkeit thermolabile Substrate (z.B. Kunststoffe oder Holz) zu beschichten, ist es notwendig, die Reaktivität derartiger Systeme zu erhöhen.

Es wurden verschiedene Versuche unternommen, die Aushärtung von PolyurethanMassen auf Basis von uretdiongruppenhaltigen Härtern durch den Einsatz von Katalysatoren zu beschleunigen. Es wurde eine Reihe von Verbindungen vorgeschlagen, wie die aus der Polyurethanchemie bekannten metallorganischen Katalysatoren, wie Zinn(II)-acetat, Zinn((l)-octoat, Zinn(ll)-ethylcaproat, Zinn(ll)-laurat, Dibutylzinndiacetat, Dibutylzinndilaurat, Dibutylzinnmaleat (z.B. EP 045 994 A1, EP 045 998 A1, WO 91/07452 oder DE 24 20 475), Eisen(lll)-chlorid, Zinkchlorid, Zink-2-ethylcaproat und Molybdänglykolat oder tertiäre Amine, wie Triethylamin, Pyridin, Methylpyridin, Benzyldimethylamin, N,N-Endoethylenpiperazin, N-Methylpiperidin, Pentamethyldiethytentriamin, N,N-Dimethylaminocyclohexan und N,N'-Dimethylpiperazin (z.B. EP 639 598 A1).

In der Praxis kommen im allgemeinen zinnorganische Verbindungen der genannten Art zum Einsatz. Die mit diesen Katalysatoren erreichbaren Reaktivitätserhöhungen genügen noch nicht den Ansprüchen an, bei niedrigen Temperaturen aushärtende Massen.

In EP 803 524 A1 werden N,N'-trisubstituierte Amidine enthaltende Verbindungen als Spaltungskatalysatoren beschrieben. Gegenstand dieses Standes der Technik ist ein Polyurethan-Pulverlack, der eine Hydroxylgruppen aufweisende Bindemittelkomponente, eine Uretdiongruppen und gegebenenfalls freie Isocyanatgruppen aufweisende Polyadditionsverbindung auf Basis aliphatischer und/oder cycloaliphatischer Diisocyanate, mindestens einen N,N,N'-trisubstituierte Amidinstrukturen enthaltenden Katalysator mit einem Amidingruppengehalt (berechnet als CN2; Molekulargewicht = 40) von 12,0 bis 47,0 Gew.-%, gegebenenfalls weitere aus der Polyurethanchemie bekannte Katalysatoren und gegebenenfalls weitere aus der Pulverlacktechnologie bekannte Hilfs- und Zusatzstoffe enthält. Die Hydroxylgruppen aufweisende Bindemittelkomponente wird in dem Pulverlack in solchen Mengen eingesetzt, daß auf jede Hydroxylgruppe der Bindemittelkomponente 0,6 bis 1,4, vorzugsweise 0,8 bis 1,2 Isocyanatgruppen der Uretdiongruppen und gegebenenfalls freie Isocyanatgruppen aufweisenden Polyadditionsverbindung entfallen, wobei unter Isocyanatgruppen die Summe aus in dimerer Form als Uretdiongruppen vorliegenden Isocyanatgruppen und freien Isocyanatgruppen verstanden wird.
In der Veröffentlichung werden mögliche Härtungstemperaturen ab 130°C genannt. Den Ausführungsbeispielen ist jedoch zu entnehmen, daß bei Härtungstemperaturen bis 170°C keine qualitativ hochwertigen Beschichtungen erhalten wurden.

US-A-5 756 634 beschreibt eine NCO-, OH- und Uretdiongruppen augweisende Zusammensetzung. Die erfindungsgemäßen Katalysatoren werden nicht verwendet.

Aufgabe der vorliegenden Erfindung ist es nun, uretdiongruppenhaltige Massen mit höherer Reaktivität zur Verfügung zu stellen, die bei niedrigeren Temperaturen in gleicher Zeit oder bei gleichen Temperaturen in deutlich kürzerer Zeit als die bislang bekannten, Uretdionhärter enthaltenden Massen aushärten.

Die Aufgabe wird durch die Erfindung nach den Ansprüchen 1 und 11 gelöst. Weiterbildungen sind Gegenstand der Unteransprüche.

Mit der Bereitstellung der erfindungsgemäßen Massen konnte diese Aufgabe gelöst werden. Die erfindungsgemäßen Massen basieren auf der Tatsache, daß unter den erfindungsgemäßen Bedingungen Lewissäure-Katalysatoren, insbesondere metallorganische Verbindungen die Umsetzung von Uretdiongruppen mit Hydroxylgruppen so stark beschleunigen, daß sich mit ihrer Hilfe unter Verwendung der bekannten Uretdionhärter Massen herstellen lassen, die bereits bei vergleichsweise niedrigen Temperaturen in gleicher Zeit oder bei gleichen Temperaturen in deutlich kürzerer Zeit als die bislang bekannten, Uretdionhärter enthaltenden Massen aushärten.

Die Erfindung betrifft bei niedrigen Temperaturen aushärtbare uretdiongruppenhaltige Massen, enthaltend A) eine Hydroxylgruppen aufweisende Bindemittelkomponente, B) eine Uretdiongruppen und gegebenenfalls freie Isocyanatgruppen aufweisende Polyadditionsverbindung als Vernetzer, C) mindestens einen aktiven oder reaktiv aktivierbaren Lewissäure-Katalysator, gegebenenfalls D) weitere aus der Polyurethanchemie bekannte Katalysatoren und gegebenenfalls E) an sich bekannte Hilfs- und Zusatzmittel, mit der Maßgabe, daß (A1) die Bindemittelkomponente frei von Carboxylgruppen ist, oder (A2) die Konzentration an Carboxylgruppen kleiner ist als die Konzentration an aktivem Katalysator (C) oder (A3) bei einer höheren Konzentration an Carboxylgruppen gegenüber der eingesetzten Katalysatorkonzentration (C) eine solche Menge an reaktivem Agens, wie z.B. Epoxyverbindung oder Oxazolin zugegeben wird, die zur Blockierung der Menge an Carboxylgruppen notwendig ist, um-eine notwendige Konzentration an aktivem Katalysator (C) zu realisieren.

Gegenstand der Erfindung ist auch die Verwendung der Massen zur Beschichtung von hitzeresistenten und thermolabilen Substraten, zur Verkapselung von Bauteilen, als verarbeitbare, härtbare Formmasse und als thermisch härtbare Spachtelmasse.

Bei der, in den erfindungsgemäßen Massen enthaltenen Komponente A) handelt es sich um beliebige Hydroxylgruppen aufweisende Bindemittel mit einer OH-Zahl von 25 bis 400, vorzugsweise von 25 bis 200 und einem mittleren Molekulargewicht von 400 bis 20.000, vorzugsweise von 1.000 bis 10.000, die oberhalb der Reaktionsoder Verarbeitungstemperatur in flüssiger oder viskoser Form vorliegt. Derartige Bindemittel sind beispielsweise hydroxylgruppenhaltige Polyester, Polyacrylate, Polyether oder Polyurethane aber auch beliebige Mischungen solcher Harze.

Bei der in den erfindungsgemäßen Massen enthaltenen Komponente B) handelt es sich um eine oberhalb der Reaktions- oder Verarbeitungstemperatur in flüssiger oder viskoser Form vorliegende, Uretdiongruppen und gegebenenfalls freie Isocyanatgruppen aufweisende Polyadditionsverbindung auf der Basis aliphatischer und/oder cycloaliphatischer Diisocyanate, insbesondere um solche auf Basis von 1,6-Hexamethylen-diisocyanat (HDI), 1-lsocyanato-3,3,5-trimethyl-5-isocyanatomethylcyclohexan (IPDI), 4,4'-Diisocyanatodicyclohexylmethan, 1,3-Diisocyanato-2(4)-methyl-cyclohexan oder beliebiger Gemische dieser Diisocyanate, wobei HDI und IPDI bevorzugt sind.

Die Komponente B) wird in den erfindungsgemäßen Massen in solchen Mengen eingesetzt, daß auf jede Hydroxylgruppe der Bindemittelkomponente A) 0,8 bis 2,4, vorzugsweise 0,9 bis 2,2 lsocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird.

Zur Beschleunigung der Aushärtung enthalten die erfindungsgemäßen Massen Lewissäure-Katalysatoren C), metallorganische Verbindungen wie z.B. vom Zinn- und/oder Zink- und/oder Cadmium- und/oder Eisen- und/oder Mangan-und/oder Molybdän- und/oder Aluminium- und/oder Kobalt- und/oder Zirkoniumtyp in Abwesenheit oder in Gegenwart von tertiären Amin- und/oder anwesenden oder sich reaktiv bildenden Ammonium- und/oder N,N,N'trisubstituierte Amidin- und/oder anwesenden oder sich reaktiv bildenden Phosphonium- und/oder Imidazol- und/oder Epoxyverbindungen zur Aktivierung oder Erhöhung der Katalysatorwirkung.

Einsetzbare Katalysatoren C) sind metallorganische Verbindungen der allgemeinen Formel

R₂MeX₂

in welcher
Me = Metall
R = Alkylrest und
X = Carboxylatrest bedeutet,
sowie metallorganische Verbindungen der allgemeinen Formel

R₂MeY₂

in welcher
Me = Metall
R = Alkylrest und
Y = Alkoholatrest bedeutet,
sowie metallorganische Verbindungen der allgemeinen Formel

ZₙMe

in welcher
Me = Metall
Z = Acetylacetonatrest und
n = 2 oder 3 bedeutet,
oder beliebige Mischungen solcher metallorganischer Katalysatoren.

Einsetzbare Katalysatoren C) sind auch die Derivate der oben genannten Verbindungen aus Folgereaktionen, wie z.B. Hydrolyse- und Zersetzungsprodukte oder beliebige Mischungen dieser Derivate oder beliebige Mischungen der oben genannten Katalysatoren mit diesen Derivaten.

Die Katalysatoren C) kommen in den erfindungsgemäßen Massen in einer Menge von 0,01 bis 5,0 Gew.-%, vorzugsweise von 0,1 bis 3,0 Gew.-% bezogen auf die Gesamtmenge der Komponenten A) bis D) zum Einsatz.

Gegebenenfalls können in den erfindungsgemäßen Massen als weitere Katalysatoren D) aus der Polyurethanchemie bekannte Verbindungen mitverwendet werden.

Gegebenenfalls können die erfindungsgemäßen Massen an sich bekannte Hilfs- und Zusatzmittel (E) enthalten, wie z.B. Verlaufsmittel, Lichtschutzmittel, UV-Absorber, Pigmente, oder auch Farbstabilisatoren.

Die Homogenisierung der einzelnen Massebestandteile erfolgt durch Mischen der Komponenten in Schmelze, vorzugsweise in einem Laborkneter, Co-Kneter oder Extruder. Temperatur und/oder Mischzeit und/oder Drehzahl werden so eingestellt, daß während der Homogenisierung im wesentlichen noch keine Verzweigungs- oder Polymeraufbaureaktionen stattfinden. Im Laborkneter erfolgt beispielsweise zunächst ein Aufschmelzen der Komponente A. Danach erfolgt schrittweise die Zugabe der Komponenten B und E. Zuletzt erfolgt die Dosierung des Katalysators C oder Katalysatorgemisches C und D, vorzugsweise als Batch. Für die Homogenisierung in einem Co-Kneter oder im Extruder werden beispielsweise alle Komponenten gründlich gemischt und anschließend im Co-Kneter oder Extruder homogenisiert. Die Homogenisierung der Komponenten erfolgt bei Massetemperaturen zwischen 50 und 110°C bevorzugt zwischen 70 und 100°C und dauert bis 30 min. Zur Erzielung einer optimalen Durchmischung kann im Co-Kneter oder im Extruder eine zweimalige Extrusion vorteilhaft sein, wobei die Komponente C gegebenenfalls auch erst im zweiten Extrusionsschritt zugegeben werden kann.
Die homogenisierte Masse wird nachfolgend durch schnelles Abkühlen zum Erstarren gebracht. Dies erfolgt durch Aufbringen der Schmelze auf ein Kühlband oder Einbringen in flüssigen Stickstoff. Die erstarrte Masse wird gebrochen und zerkleinert oder bei Pufvertacken anschließend mit einer Sichtermühle zu Pulver mit einer Teilchengröße < 90 µm vermahlen.

Die Homogenisierung der Komponenten kann auch in Lösung erfolgen. Die Homogenisierungstemperatur liegt dabei oberhalb Raumtemperatur und übersteigt im wesentlichen nicht 110°C. Vorteilhafterweise liegt hier mindestens eine der Komponenten (A-E), bevorzugt A und/oder B, in flüssiger Form vor, in der mindestens eine der anderen Komponenten löslich ist. Die homogenisierte Masse wird nachfolgend durch Abschrecken schlagartig auf Temperaturen von mindestens 20 K unter Mischungstemperatur abgekühlt und kann danach bis zur Verarbeitung gelagert werden.

Es sind hochreaktive, thermisch härtbare Systeme herstellbar, bei denen die reaktiven Komponenten einschließlich Katalysatoren und gegebenenfalls verwendungsbedingt anderen Zusatzstoffen beispielsweise durch Schmelzeextrusion homogenisiert und anschließend zerkleinert und/oder pulverisiert werden und über eine ausreichend hohe Lagerstabilität verfügen.
Bei Weiterverarbeitung der erfindungsgemäßen Massen zur Beschichtung, können die so hergestellten Pulverlackformulierungen nach üblichen Beschichtungsverfahren, wie z. B. elektrostatischem Pulversprühen oder Wirbelsintern, auf die zu beschichtenden Substrate aufgebracht werden. Die Härtung der Überzüge erfolgt durch Erhitzen auf Temperaturen von 110 bis 200°C, vorzugsweise auf Temperaturen von 120 bis 180°C, bis eine vollständige Vernetzung erreicht und über DSC-Messungen im wesentlichen keine Reaktionswärme mehr nachweisbar ist. Die Temperaturerhöhung erfolgt dabei linear und/oder nichtlinear und/oder die Temperatur wird bei Reaktionstemperatur konstant gehalten. Bei höheren Temperaturen, die den Härtungstemperaturen des Standes der Technik entsprechen, erfolgt eine Härtung in deutlich kürzerer Zeit. Andererseits kann erfindungsgemäß die Härtung bei deutlich niedrigeren Temperaturen erreicht werden. Die Härtung der härtbaren Massen kann beispielsweise in zwei oder mehr aufeinanderfolgenden oder zeitlich getrennten Härtungsstufen bei gleichen oder unterschiedlichen Härtungstemperaturen durchgeführt werden.
Nach der Teilvernetzung der härtbaren Massen oder beispielsweise einer Beschichtung in der ersten Härtungsstufe erfolgt gegebenenfalls nach einer Bearbeitung die Aushärtung in der zweiten Härtungsstufe. Während der Aushärtung ist eine chemische Kopplung von Massen oder Beschichtungen in der Grenzfläche der härtbaren Massen oder Beschichtungen möglich.
Die erste Reaktionsstufe wird bei relativ niedrigen Temperaturen vorzugsweise ≤ 160 °C durchgeführt. Wird die eingesetzte Menge an Katalysator (C) gesenkt, ist die Temperatur für die erste Reaktionsstufe zu erhöhen und/oder die Reaktionszeit zu verlängern. Die zweite Reaktionsstufe wird bei mindestens gleichen Reaktionstemperaturen bei deutlich längerer Reaktionszeit oder vorzugsweise bei höheren Temperaturen als die erste Reaktionsstufe in kürzerer Zeit bis zur vollständigen Härtung durchgeführt.

Erfindungsgemäß können beliebige hitzeresistente Substrate, wie beispielsweise Glas oder Metalle, aber auch thermolabile Substrate wie Kunststoffe oder Holz beschichtet werden.

Durch den Einsatz der erfindungsgemäßen Katalysatoren unter den beschriebenen Bedingungen ist die Umsetzung der Uretdiongruppen enthaltenden Härter mit Hydroxylgruppen enthaltenden Bindemittelkomponenten bei vergleichsweise niedrigen Temperaturen möglich.

Ist der Carboxylgruppengehalt der Bindemittelkomponente B) gleich oder größer als der Gehalt an Katalysator C), gelingt es durch Zugabe z.B. von Epoxyverbindung eine ausreichende Menge an Carboxylgruppen zu blockieren, so daß eine katalytisch wirksame Konzentration an aktivem Katalysator C) entsteht.

Zwar ist die Verwendung von Dialkylzinndicarboxylaten als Katalysatoren für die Vernetzung hydroxylgruppenhaltiger Binder mit uretdiongruppenhaltigen Härtern nach dem Stand der Technik bekannt, unter den beschriebenen Bedingungen ist aber keine katalytische Aktivität der beschriebenen metallorganischen Verbindungen auf die Umsetzung der Uretdionfunktion nachweisbar. Die im Vergleich zu unkatalysierten Massen erniedrigten Härtungstemperaturen der im Stand der Technik beschriebenen Uretdiongruppen enthaltende Massen ist vielmehr auf eine Beschleunigung der Umsetzung der thermisch aus den Uretdionringen regenerierten Isocyanatgruppen mit Hydroxylgruppen zurückzuführen.

Im weiteren wird die Erfindung an Ausführungsbeispielen näher erläutert.
Dabei ist in Beispiel 1 der Stand der Technik in Form einer unkatalysierten Zusammensetzung dargestellt.

### Beispiele

In einem Laborkneter werden die Verbindungen (A) und (B) homogenisiert. Die Kneterkammertemperatur wird so eingestellt, daß die Massetemperatur 90°C nicht wesentlich überschreitet. Zu dieser Masse werden nacheinander die Verbindungen (E), (D) und (C) zugegeben.
Die Zusammensetzungen der Beispielmischungen sind in Tabelle 1 angegeben. Die Eigenschaften der eingesetzten Komponenten sind in Tabelle 2 angegeben.
Die homogenisierten Massen werden durch Einbringen in flüssigen Stickstoff abgeschreckt. Die abgeschreckten Massen werden in einer Labormühle unter Kühlung zerkleinert und bei 30°C im Vakuum getrocknet. Die Charakterisierung der Proben erfolgt mittels Differential Scanning Calorimetrie (DSC). Die Untersuchungen erfolgten dynamisch in einem Temperaturbereich von 40 bis 260°C bei einer Aufheizgeschwindigkeit von 10 K/min. Die Ergebnisse sind in Tabelle 3 angegeben.

**Tabelle 1:**

| **Zusammensetzung der Beispielmischungen *** | | | | | | | | |
|---|---|---|---|---|---|---|---|---|
| **Komponenten/Beispiel** | **1** | **2** | **3** | **4** | **5** | **6** | **7** | **8** |
| (A) Hydroxylterminierter Polyester | 75.7 | 75,7 | 75,7 | 75,7 | 75,7 | 75,7 | - | 75,7 |
| (A1) Hydroxylterminiertes Polycaprolacton | - | - | - | - | - | - | 76,7 | |
| Triglycidylisocyanurat | 2,9 | 2,9 | 2,9 | 2,9 | 2,9 | - | - | - |
| (B) Uretdiongruppen enthaltende Polyadditionsverbindung | 24,3 | 24,3 | 24,3 | 24,3 | 24,3 | 24,3 | 24,3 | 24,3 |
| (C) Dibutylzinndilaurat | - | 1,0 | - | - | - | - | - | - |
| (C) Dibutylzinndibutylat | - | - | 1,0 | - | - | - | - | - |
| (C) Zinkacetylacetonat | - | - | - | 1,0 | 1,0 | 1,0 | 1,0 | 3,0 |
| (D) Benzyltrimethylammoniumchlorid | - | - | - | - | 1,0 | 1,0 | - | - |
| (E) Acronal 4F | - | - | - | - | - | 0,6 | - | - |
| (E) Weißpigment | - | - | - | - | - | 0,6 | - | - |

| | | | | | | | | |
|---|---|---|---|---|---|---|---|---|
| * alle Angaben sind in Gew.-% | | | | | | | | |

**Tabelle 2:**

| **Eigenschaften der in den Beispielen eingesetzten Komponenten** | | | | |
|---|---|---|---|---|
| **Komponente** | **OH-Zahl** | **COOH-Zahl** | **Isocyanat-Equivalent** | **T**_{**m**} **(°C)** |
| Hydroxylterminierter Polyester | 30 | ≤5 | - | 56 |
| Hydroxylterminiertes Polycaprolacton | 56 | ≤0,1 | - | 40-50 |
| Triglycidylisocyanurat | - | - | - | 98 |
| Uretdiongruppen enthaltende Potyadditionsverbindung | - | - | 310 | 54 |

**Tabelle 3:**

| **Ergebnisse der thermischen Untersuchungen (dynamisch)** | | | | | | | | |
|---|---|---|---|---|---|---|---|---|
| **Probennummer** | **1** | **2** | **3** | **4** | **5** | **6** | **7** | **8** |
| Beginn der Reaktion Tₒₙₛₑₜ (°C) | 184,2 | 144,0 | 134,9 | 131,0 | 128,2 | 123,6 | 122,4 | 119.1 |
| Reaktionsmaximum Tₘₐₓ (°C) | 211,8 | 164,6 | 160,3 | 145,3 | 145,2 | 141,6 | 139,4 | 141,8 |

**Tabelle 4:**

| **Ergebnisse der thermischen Untersuchungen (isotherm)** | | | | | |
|---|---|---|---|---|---|
| **Beispiel** | **1** | **2** | **3** | **4** | **5** |
| Reaktionstemperatur in °C | 150 | 150 | 150 | 130 | 130 |
| Reaktionszeit (min) bis zur weitgehend vollst. Vernetzung | -*) | 17 | 16 | 12 | 12 |

| | | | | | |
|---|---|---|---|---|---|
| *) keine nennenswerte Vernetzung eingetreten | | | | | |

## Patentansprüche

1. Härtbare, uretdiongruppenhaltige Massen, enthaltend (A) eine, endständige und/oder seitenständige Hydroxylgruppen aufweisende, lineare oder verzweigte Bindemittel-Komponente mit einer OH- Zahl von 25 bis 400 und einem mittleren Molekulargewicht von 400 bis 20.000, die oberhalb der Reaktions- oder Verarbeitungstemperatur in flüssiger oder viskoser Form vorliegt, wobei (A1) entweder die Bindemittelkomponente frei von Carboxylgruppen ist, oder (A2) die Konzentration an Carboxylgruppen kleiner ist als die Konzentration an aktivem Katalysator (C) oder (A3) bei einer höheren Konzentration an Carboxylgruppen gegenüber der eingesetzten Katalysatorkonzentration (C) eine solche Menge reaktivem Agens zugegeben wird, die zur Blockierung der Menge an Carboxylgruppen notwendig ist, um eine notwendige Konzentration an aktivem Katalysator (C) zu realisieren, und (B) eine oberhalb der Reaktions- oder Verarbeitungstemperatur in flüssiger oder viskoser Form vorliegende, Uretdiongruppen und gegebenenfalls freie Isocyanatgruppen aufweisende Polyadditionsverbindung auf der Basis aliphatischer und/oder cycloaliphatischer Diisocyanate und (C) mindestens einen aktiven oder einen reaktiv aktivierbaren Lewissäure-Katalysator, der aus metallorganischen Verbindungen nach den allgemeinen Formeln
R₂MeX₂ und/oder R_{₂}MeY_{₂} und/oder ZₙMe
in welchen
Me = Metall
R = Alkylrest
X = Carboxylatrest
Y = Alkoholatrest
Z = Acetylacetonatrest und n = 2 oder 3
bedeutet, besteht, und (D) weitere aus der Urethanchemie bekannte Katalysatoren und (E) an sich bekannte Hilfs- und Zusatzmittel, wobei (D) und (E) zugegeben sein können.

2. Massen gemäß Anspruch 1, bei der die Komponente (A) aus einer Hydroxylgruppen aufweisenden polymeren Verbindung besteht, wie z.B. Polyacrylate, Polyether, Polyester und Oligo- bzw. Polyepoxide.

3. Massen gemäß Anspruch 1, bei der die Komponente (B) aus einer Uretdiongruppen und gegebenenfalls freie Isocyanatgruppen aufweisenden Polyadditionsverbindung auf Basis von Isophorondiisocyanat und/oder Hexamethylendiisocyanat besteht.

4. Massen gemäß Anspruch 1, bei dem das reaktive Agens eine Epoxyverbindung und/oder eine Oxazolinverbindung ist.

5. Massen gemäß Anspruch 1, bei der die Komponente (C) aus mindestens einem Derivat eines metallorganischen Katalysators besteht.

6. Massen gemäß Anspruch 1, bei der die Komponente (C) aus beliebigen Mischungen der genannten metallorganischen Katalysatoren und Derivate besteht.

7. Massen gemäß Anspruch 1, bei der die Komponente (D) aus nucleophilen Substanzen besteht.

8. Massen gemäß Anspruch 1, bei der die Komponente (A) eine OH-Zahl von 25 bis 200 und ein mittleres Molekulargewicht von 1.000 bis 10.000 aufweist.

9. Verfahren zur Herstellung von härtbaren, uretdiongruppenhaltigen Massen nach mindestens einem der Ansprüche 1 bis 8, bei dem als Ausgangsstoffe unvernetzte Massen, bestehend aus (A) einer, endständige und/oder seitenständige Hydroxylgruppen aufweisenden, linearen oder verzweigten Bindemittel-Komponente mit einer OH-Zahl von 25 bis 400 und einem mittleren Molekulargewicht von 400 bis 20.000, die oberhalb der Reaktions- oder Verarbeitungstemperatur in flüssiger oder viskoser Form vorliegt, wobei (A1) entweder die Bindemittelkomponente frei von Carboxylgruppen ist, oder (A2) die Konzentration an Carboxylgruppen kleiner ist als die Konzentration an aktivem Katalysator (C) oder (A3) bei einer höheren Konzentration an Carboxylgruppen gegenüber der eingesetzten Katalysatorkonzentration (C) eine solche Menge an reaktivem Agens zugegeben wird, die zur Blockierung der Menge an Carboxylgruppen notwendig ist, um eine notwendige Konzentration an aktivem Katalysator (C) zu realisieren, und (B) einer oberhalb der Reaktions- oder Verarbeitungstemperatur in flüssiger oder viskoser Form vorliegenden, Uretdiongruppen und gegebenenfalls freie Isocyanatgruppen aufweisenden Polyadditionsverbindung auf der Basis aliphatischer und/oder cycloaliphatischer Diisocyanate und (C) mindestens einem aktiven oder einem reaktiv aktivierbaren Lewissäure-Katalysator, der aus metallorganischen Verbindungen nach den allgemeinen Formeln
R₂MeX₂ und/oder R_{₂}MeY_{₂} und/oder ZₙMe
in welchen
Me = Metall
R = Alkylrest
X = Carboxylatrest
Y = Alkoholatrest
Z = Acetylacetonatrest und n = 2 oder 3
bedeutet, besteht und (D) weiteren, aus der Urethanchemie bekannte Katalysatoren und (E) an sich bekannten Hilfs- und Zusatzmitteln, wobei (D) und (E) zugegeben sein können, eingesetzt werden, diese Ausgangsstoffe in Lösung und/oder in Schmelze längstens bis eine Molmassenerhöhung nachweisbar ist, homogenisiert werden, danach die Lösung oder die Schmelze schnell unterhalb der Reaktionstemperatur der Masse abgekühlt wird und anschließend eine Lagerung der härtbaren Masse erfolgen kann und danach oder an die Abkühlung anschließend die Weiterverarbeitung der härtbaren Masse zur vollständigen Vernetzung durchgeführt wird, wobei die Temperatur solange linear und/oder nichtlinear erhöht und/oder bei Reaktionstemperatur konstant gehalten wird, bis über DSC-Messungen im wesentlichen keine Reaktionswärme mehr nachweisbar ist.

10. Verfahren nach Anspruch 9, bei dem die Homogenisierung der härtbaren Massen in Schmelze in einem Laborkneter oder einem Co-Kneter und/oder einem Extruder erfolgt.

11. Verfahren nach Anspruch 9, bei dem die Homogenisierung der härtbaren Massen bei Temperaturen kleiner gleich 110°C erfolgt.

12. Verfahren nach Anspruch 9, bei dem die Homogenisierung der härtbaren Massen bis 30 min durchgeführt wird.

13. Verfahren nach Anspruch 9, bei dem die Abkühlung unter die Reaktionstemperatur nach der Homogenisierung der härtbaren Massen durch Einbringen der Schmelze in flüssigen Stickstoff oder durch Aufbringen auf ein Kühlband erfolgt.

14. Verfahren nach Anspruch 9, bei dem mindestens eine der Komponenten (A) bis (E) in flüssiger Form eingesetzt wird.

15. Verfahren nach Anspruch 9, bei dem die Temperatur in einem Bereich oberhalb der Homogenisierungstemperatur bis 200°C linear und/oder nichtlinear angehoben wird.

16. Verfahren nach Anspruch 9, bei dem die Zugabe des Katalysators oder Katalysatorgemisches (C; D) als Batch nach der Homogenisierung der Komponenten (A), (B) und (E) bei abgesenkten Temperaturen durchgeführt wird.

17. Verfahren nach Anspruch 9, bei dem die Homogenisierung der härtbaren Massen in Schmelze erfolgt.

18. Verfahren nach Anspruch 9, bei dem die Homogenisierung der härtbaren Massen ein- oder mehrstufig in Schmelze durchgeführt wird, wobei der Katalysator bei einstufiger Homogenisierung bei tieferen Temperaturen und bei mehrstufiger Homogenisierung erst in der zweiten Stufe bei tieferen Temperaturen zudosiert wird.

19. Verfahren nach Anspruch 9, bei dem die Temperatur stufenweise erhöht wird und die Temperatur nach jedem Erhöhungsschritt für eine Zeitspanne von 1 bis 60 Minuten konstant gehalten wird.

20. Verfahren nach Anspruch 9, bei dem die Temperatur in zwei Stufen erhöht wird, wobei die zweite Temperaturerhöhung nach der Haltezeit unmittelbar darauffolgend oder zeitlich später durchgeführt wird.

21. Verwendung der Massen nach den Ansprüchen 1 bis 8 zur Beschichtung von hitzeresistenten und thermolabilen Substraten, zur Verkapselung von Bauteilen, als verarbeitbare, härtbare Formmasse und als thermisch härtbare Spachtelmasse.

## Claims

1. Hardenable masses containing uretdione groups containing (A) a linear or branched bonding agent component having terminal and/or side chain hxdroxyl groups with a hydroxyl number of 25 to 400 and an average molecular weight of 400 to 20,000, which is present in a fluid or viscous form above the reaction or processing temperature, with (A1) either the bonding agent component being free of carboxyl groups or (A2) the concentration of carboxyl groups being less than the concentration of the active catalyst (C) or (A3), in the case of a higher concentration of carboxyl groups in relation to the catalyst concentration (C) used. such an amount of reactive agent is added that is necessary to block the amount of carboxyl groups in order to realize a required concentration of the active catalyst (C), and (B) a polyaddition compound present in a fluid or viscous form above the reaction or processing termperature and containing uretdione groups and, optionally, free isocyanate groups and based on aliphatic and/or cycloaliphatic diisocyanates, and (C) at least one active-or reactively activatable Lewis acid catalyst, which comprises metalorganic catalysts of the general formula
R₂MeX₂ and/or R₂MeY₂ and/or ZₙMe in which
Me means metal
R means alkyl residue,
X means carboxyl residue,
Y means alcoholate residue,
Z means acetylacetonate residue, and
n means 2 or 3
and (D) other catalysts known from urethane chemistry and (E) auxiliary materials and additives that are known per se, where (D) and (E) can be added.

2. Masses according to claim 1, in which the component (A) comprises a polymer compound having hydroxyl groups such as, for example, polyacrylates, polyethers, polyesters, and oligo- and/or polyepoxides.

3. Masses according to claim 1, in which the component (B) comprises a polyaddition compound based on isophorone diisocyanate and/or hexamethylene diisocyanate having uretdione groups and optionally free isocyanate groups.

4. Masses according to claim 1, in which the reactive agent is an epoxy compound and/or an oxazoline compound.

5. Masses according to claim 1, in which the component (C) comprises at least one derivative of the metalorganic catalyst.

6. Masses according to claim 1, in which the component (C) comprises any desired mixtures of the above-mentioned metalorganic catalysts and derivatives.

7. Masses according to claim 1, in which the component (D) comprises nucleophilic substances.

8. Masses according to claim 1, in which the component (A) has a hydroxyl number of 25 to 200 and an average molecular weight of 1,000 to 10,000.

9. Process for the production of hardenable masses containing uretdione groups according to at least one of the claims 1 to 8, in which masses containing uretdione groups that are not cross-linked are used as original material, which consist of (A) a linear or branched bonding agent component having terminal and/or side chain hydroxyl groups with a hydroxyl number of 25 to 400 and an average molecular weight of 400 to 20,000, which is present in a fluid or viscous form above the reaction or processing temperature, with (A1) either the bonding agent component being free of carboxyl groups or (A2) the concentration of carboxyl groups being less than the concentration of the active catalyst (C) or (A3), in the case of a higher concentration of carboxyl groups in relation to the catalyst concentration (C) used, such an amount of reactive agent is added that is necessary to block the amount of carboxyl groups in order to realize a required concentration of the active catalyst (C), and (B) a polyaddition compound present in a fluid or viscous form above the reaction or processing temperature and containing uretdione groups and, optionally, free isocyanate groups and based on aliphatic andlor cycloaliphatic diisocyanates, and (C) at least one active or reactively activatable Lewis catalyst, which comprises metalorganic catalysts of the general formula
R₂MeX₂ and/or R₂MeY₂ and/or ZₙMe in which
Me means metal
R means alkyl residue,
X means carboxyl residue,
Y means alcoholate residue,
Z means acetylacetonate residue, and
n means 2 or 3,
and (D) other catalysts known from urethane chemistry and (E) auxiliary materials and additives that are known per se, where (D) and (E) can be added, these original materials are homogenized in solution and/or in melt at the longest until an increase in molar mass can be verified, then the solution or melt is quickly cooled to below the reaction temperature of the mass and subsequently the hardenable mass can be stored and then or subsequently to cooling the further processing of the hardenable mass to complete cross-linking is performed, with the temperature being linearly and/or non-linearly increased and/or kept constant at the reaction temperature sufficiently long until essentially no more reaction heat can be verified by means of DSC measurements.

10. Process according to claim 9, in which the homogenization of the hardenable masses in the melt takes place in a laboratory kneader or in a co-kneader and/or in an extruder.

11. Process according to claim 9, in which the homogenization of the hardenable masses occurs at temperatures less than or equal to 110 °C.

12. Process according to claim 9, in which the homogenization of the hardenable masses is performed for up to 30 min.

13. Process according to claim 9, in which the cooling below the reaction temperature occurs after the homogenization of the hardenable masses by insertion of the melt into liquid nitrogen or by applying it to a cooling belt.

14. Process according to claim 9, in which at least one of the components (A) to (E) is used in a fluid form.

15. Process according to claim 9, in which the temperature is increased linearly and/or non-linearly in a range above the homogenization temperature up to a maximum of 200 °C.

16. Process according to claim 9, in which the addition of the catalyst or catalyst mixture (C, D) as a batch is performed after the homogenization of the components (A), (B) and (E) at reduced temperatures.

17. Process according to claim 9, in which the homogenization of the hardenable masses occurs in a melt.

18. Process according to claim 9, in which the homogenization of the hardenable masses is performed in one or more stages in a melt, with the catalyst being added at lower temperatures in the case of single-stage homogenization and, in the case of multi-stage homogenization, is not added until the second stage at lower temperatures.

19. Process according to claim 9, in which the temperature is increased in stages and the temperature is kept constant after every increasing step for a time period of 1 to 60 minutes.

20. Process according to claim 9, in which the temperature is increased in two stages, with the second increase in temperature being performed immediately thereafter or temporally later.

21. Use of the masses according to claims 1 to 8 for coating heat-resistant and thermolabile substrates, for masking components, as a treatable, hardenable coating form and as a thermally hardenable molding compound and a thermally hardenable surfacer.

## Revendications

1. Masses durcissables contenant des uretdiones, renfermant
A) un composant d'agent liant linéaire ou ramifié, possédant des groupes hydroxyle terminaux et/ou situés latéralement, ayant un indice d'OH de 25 à 400 et un poids moléculaire moyen de 400 à 20.000, qui se présente au-dessus de la température de réaction ou de la température de façonnage sous forme liquide ou visqueuse, dans lequel, soit (A1) le composant d'agent liant est dépourvu de groupe carboxyle, soit (A2) la concentration en groupe carboxyle est inférieure à la concentration en catalyseur actif, soit (A3) pour une concentration plus élevée en groupes carboxyle par rapport à la concentration mise en oeuvre de catalyseur (C), on ajoute une quantité d'agent réactif telle que celle nécessaire pour le blocage de la quantité de groupe carboxyle afin de réaliser une conccntration nécessaire en catalyseur actif, et
B) un composé de polyaddition représenté au-dessus de la température de réaction ou de façonnage sous forme liquide ou visqueuse, possédant des groupes uretdiones et le cas échéant des groupes isocyanate libres à base de diisocyanates aliphatiques et/ou cycloaliphatiques, et
C) au moins un catalyseur d'acide de Lewis actif ou un catalyseur activable par réaction qui consiste en des composés métallo-organiques selon la formule générale
R²MeX₂ et/ou R₂MeY₂ et/ou ZₙMe
dans lesquelles
Me = métal
R = reste alkyle
X = reste carboxylate
Y = reste alcoolate
et Z = reste acétyl acétonate et n = 2 ou 3, et
D) d'autres catalyseurs connus de la chimie des uréthanes, et
E) des adjuvants et des additifs connus en soi pour lesquels (D) et (E) peuvent être ajoutés.

2. Masses conformément à la revendication 1,
dans laquelle le composant (A) consiste en un composé polymère qui possède des groupes hydroxyles comme par exemple des polyacrylates, des polyéthers, des polyesters et des oligo- ou des polyépoxydes.

3. Masse conformément à la revendication 1,
dans laquelle le composant (B) consiste en un composé de polyaddition possédant des groupes uretdione et le cas échéant des groupes isocyanate libres, et à base d'isophorone diisocyanatc et/ou d'hexaméthylène diisocyanate.

4. Masses conformément à la revendication 1,
dans lesquelles l'agent réactif est un composé époxydique et/ou un composé oxazolinique.

5. Masses conformément à la revendication 1,
dans lesquelles le composant (C) consiste en au moins un dérivé d'un catalyseur métallorganique.

6. Masses conformément à la revendication 1,
dans lesquelles le composant (C) consiste en des mélanges quelconques des catalyseurs métallorganiques cités et de dérivés.

7. Masses conformément à la revendication 1,
dans lesquelles le composant (D) consiste en des substances nucléophiles.

8. Masses conformément à la revendication 1,
dans lesquelles le composant (A) possède un indice d'OH de 25 à 200 et un poids moléculaire moyen de 1 000 à 10.000.

9. Procédé de production de masses durcissables, contenant des groupes uretdione selon au moins une des revendications 1 à 8,
dans lequel on fait réagir comme produits de départ, des masses non réticulées consistant en
(A) un composant d'agent liant linéaire ou ramifié, possédant des groupes hydroxyle terminaux et/ou situés latéralement ayant un indice d'OH de 25 à 400 et un poids moléculaire moyen de 400 à 20.000, et qui se présente au-dessus de la température de réaction ou de façonnage sous forme liquide ou visqueuse, avec
soit (A1) le composant d'agent liant est dépourvu de groupes carboxyle,
soit (A2) la concentration en groupes carboxyle est plus petite que la concentration en catalyseur actif (C), soit (A3) pour une concentration plus élevée en groupes carboxyle par rapport à la concentration en catalyseur (C) mise en oeuvre, on ajoute la quantité d'agent réactif nécessaire pour le blocage de la quantité de groupes carboxyle, pour réaliser une concentration nécessaire en catalyseur (C) actif, et
(B) un composé de polyaddition possédant des groupes uretdione et le cas échéant des groupes isocyanate libres, se présentant au-dessus de la température de réaction ou de façonnage sous forme liquide ou visqueuse à base de diisocyanates aliphatiques et/ou cycloaliphatiques, et
C) au moins un catalyseur à base d'acide de Lewis ou un catalyseur à base d'acide de Lewis activable par réaction qui consiste en des composés métallorganiques selon les formules générales.
R₂MₑX₂ et/ou R₂MₑY₂ et/ou ZₙMₑ
dans lesquelles
Mₑ signifie un métal
R signifie un reste alkyle
X signifie un reste carboxylate
Y signifie un reste alcoolate
et Z signifie un reste acétyle acétonate
et n signifie 2 ou 3, et
(D) de catalyseurs connus de la chimie des uréthanes, et
(E) d'adjuvants et d'additifs connus en soi pour lesquels (D) et (E) peuvent être ajoutés, ces produits de départ sont homogénéisés en solution et/ou dans un produit de fusion au plus tard jusqu'à ce qu'une augmentation de la masse molaire soit détectable, après quoi la solution ou le produit de fusion est refroidi rapidement en dessous de la température de réaction de la masse et ensuite un stockage de la masse durcissable peut s'effectuer, et ensuite ou en connexion avec le refroidissement le refaçonnage de la masse durcissable est effectué jusqu'à reticulation complète, au cours duquel la température est augmentée d'une manière linéaire et/ou non linéaire et/ou est maintenue constante à la température de réaction, jusqu'à ce qu'aucune chaleur de réaction pour l'essentiel ne soit plus détectable par des mesures par calorimétrie différentielle de balayage (DSC).

10. Procédé selon la revendication 9,
dans lequel l'homogénéisation des masses durcissables s'effectue à l'état fondu dans un malaxeur de laboratoire ou dans un co-malaxeur et/ou dans une extrudeuse.

11. Procédé selon la revendication 9,
dans lequel l'homogénéisation des masses durcissables s'effectue à des températures plus petites ou égales à 110°C.

12. Procédé selon la revendication 9,
dans lequel l'homogénéisation des masses durcissables est effectuée jusqu'à 30 min.

13. Procédé selon la revendication 9,
dans lequel le refroidissement en dessous de la température de réaction s'effectue après l'homogénéisation des masses durcissables par introduction du produit de fusion dans de l'azote liquide ou par application sur une bande refroidissante.

14. Procédé selon la revendication 9,
dans lequel au moins un des composants (A) à (E) est mis en oeuvre sous forme liquide.

15. Procédé selon la revendication 9,
dans lequel la température est élevée dans une zone au-dessus de la température d'homogénéisation jusqu'à 200°C, d'une manière linéaire et/ou non linéaire.

16. Procédé selon la revendication 9,
dans lequel l'addition du catalyseur ou du mélange de catalyseurs (C, D) est effectuée sous forme de lot (batch) après l'homogénéisation des composants (A) (B) et (E) à des températures abaissées.

17. Procédé selon la revendication 9,
dans lequel l'homogénéisation des masses durcissables s'effectue à l'état fondu.

18. Procédé selon la revendication 9,
dans lequel l'homogénéisation des masses durcissables est effectuée à l'état fondu en une ou plusieurs étapes, le catalyseur étant ajouté par doses pour homogénéisation en une étape à des températures basses, et pour homogénéisation en plusieurs étapes seulement à partir de la deuxième étape à des températures basses.

19. Procédé selon la revendication 9,
dans lequel on augmente graduellement la température et on maintient constante la température après chaque stade d'élévation pendant un laps de temps à 1 à 60 minutes.

20. Procédé selon la revendication 9,
dans lequel on augmente la température en deux étapes, la deuxième élévation de température étant effectuée après le temps d'arrêt immédiatement après ou plus tard dans le temps,

21. Utilisation des masses selon les revendications 1 à 8 en vue du revêtement de substrats réfractaires et thermolabiles, en vue du capsulage d'éléments de construction, comme masse de moulage façonnable, durcissable et comme mastic bouche-pores durcissable thermiquement.
